# EUROPEAN PATENT SPECIFICATION

(11) **EP 1 750 610 B1**
(45) Date of publication and mention of the grant of the patent: **30.12.2009**
(21) Application number: 05750283.3
(22) Date of filing: 03.06.2005
(51) Int. Cl.: A61C 19/00

(54) **DENTAL CHAIR-SIDE ORGANIZER**
ORDNERVORRICHTUNG FÜR DIE SEITE EINES ZAHNÄRZTLICHEN PATIENTENSTUHL
DISPOSITIF DE RANGEMENT POUR LE CÔTÉ D'UN FAUTEUIL DENTAIRE

(30) Priority: 03.06.2004 EP 04013190
(43) Date of publication of application: 14.02.2007
(73) Proprietor: DENTSPLY DETREY GmbH, 78467 Konstanz (DE)
(72) Inventor: GRÜTZNER, Andreas E., 78479 Reichenau (DE); KOPP, Markus, 78462 Konstanz (DE); MÜLLER, Sabine Melzer-Müller Industrial Design, 8280 Kreuzlingen (CH)
(74) Representative: Hartz, Nikolai
(86) International application number: PCT/EP2005/006007
(87) International publication number: WO 2005/117743

(56) References cited:
- WO-A-98/11845
- DE-U- 9 311 924
- GB-A- 380 407
- US-A- 5 749 730

## Description

The present invention relates to kit of parts comprising a dental chair-side organizer of transparent plastic material comprising a plurality of organizer units for storing and presenting a ready to use plurality of extrusion tips with dental material.

WO98/11845, GB 380,407, DE 93 11 924 U and US 5,749,730 disclose dental mixing blocks, and US 5 289 919 discloses an organizer for dental devices.

Dental materials, for example, dental filling materials, are usually used by the dentist while treating a patient. They are frequently packaged in small amounts in small containers, like ampules, cartridges, extrusion tips. In the following, the term "tip" denotes any such small dental material container. The tips are designed for facile insertion into an applicator instrument. Such dental materials are sold as a family of dental material types of different qualities like shades. The dentist should be able to locate and pick up a desired container with a certain dental material type without difficulty. Therefore, it is important that different dental material types are stored separately.

The dental material containers are typically commercialized as
(a) an introductory kit with between 3 and 30 tips of different types (e.g. shades) of material; or
(b) in the form of refill packages comprising a larger number (e.g. 3 to 30) tips of one type of material.

In the dental surgery environment, the refill packages are normally stored under controlled conditions in a storage room or cabinet. Of each type of tip, a certain number is kept chair-side for use within the next few treatment sessions. For this purpose, the manufacturer of the tips provides an organizer; for example, a standard drawer insert for a chair-side cabinet, with separate compartments for the different tips. Prior to the next few treatment sessions the dental nurse makes sure that sufficient numbers of tips are available chair-side. This means that compartments that are empty are filled up with fresh tips. In the practical operations in this dental-surgical environment a seemingly minor but extremely annoying difficulty has surfaced.

An experienced nurse will charge a compartment with the number of tips that are expected to be used up in the following few treatment sessions. However, different types of tips are used up at different rates. Therefore, the dental nurse has to check the compartments prior to each treatment session. If one of the compartments happens to be completely empty It has to be recharged with tips. This is unproblematlc. Sometimes, however, inspection prior to a new treatment session will show that a compartment while not empty, has a number of tips, in most practical cases one tip, which cannot be expected to last through the next session. When the dental nurse fills up this compartment with additional tips, the left-over tip becomes mingled with the new tips. A priori this has not been considered to be a problem, since in the next session the tips in the compartment (the left-over tip(s) and the new tips) are all available for use with a high expectation that the left-over tip is used soon. In practice, however, it has turned out that with a non-negligible frequency a left over tip winds up underneath the newly charged tips and therefore will not be used in the next session. It may well wait for its use under non-controlled conditions during several sessions, In some cases with a weekend in between. It further has turned out that not infrequently this situation causes tips from different batches to be mixed. This has the risk that newly added tips are used earlier than the left-over tip. The left-over tip, when used at a later time, may no longer provide the optimum or expected application behaviour or physical properties. Such surprises turned out to be quite annoying in a dental surgical situation, even if, or just because, they occur at a low frequency. It leads to risk of mistakes in treatment or to lack of control of treatment. For the dentat-surgical environment this eventuality is unacceptable.

Therefore, it is the problem of the invention to provide a dental chair-side organizer for storing and presenting a ready to use plurality of containers with identical dental materials, which allows to positively prevent a mix-up between containers of different usage status.

This problem is solved by a kit of parts as defined by claim 1, which comprises a dental chair-side organizer comprising an organizer unit for storing and presenting a ready to use plurality of containers with the same dental material, having
(a) a compartment (2) with a capacity for a large number of said containers
(b) a provision (4) adapted for holding a small number of said containers in a manner distinct from the containers in said compartment, whereby said compartment (2) and said provision (4) are arranged for
   (i) facile charging of said compartment with said large number of said containers;
   (ii) facile transference of said small number of containers from said compartment to said provision; and
   (iii) facile removal and reintroduction of each one of said small number of containers from or into said provision, and having the features as further defined by claim 1.

Said provision is adapted for holding one container. The provision is a small open tray. Moreover, the compartment of the organizer is a large open tray. The small open tray and the large open tray are contiguous to each other, forming a twin-tray. A separation barrier is provided between the large open tray and the small open tray having a recess for facile manual removal of a container from said small open tray. The large open tray is a deep tray and the small open tray is a shallow tray. The widths of said large and small open trays correspond to the length of the containers. The provision is adapted for holding one or two containers in a specific orientation or position for discrimination from the other containers in the organizer. The organizer may be a chair-side drawer insert. The containers may be small cartridges for single or multiple use. The organizer contain a plurality of said organizer units. The organizer is made of a plastic material whereby the plastic material is transparent.

The invention will now be described with reference to drawings.
Fig. 1 shows an elevational view of a preformed embodiment of an organizer unit of the invention as a twin tray;
Fig.2 shows a cross-section along line II-III.
Fig. 3 shows a cross-section along line III-III.

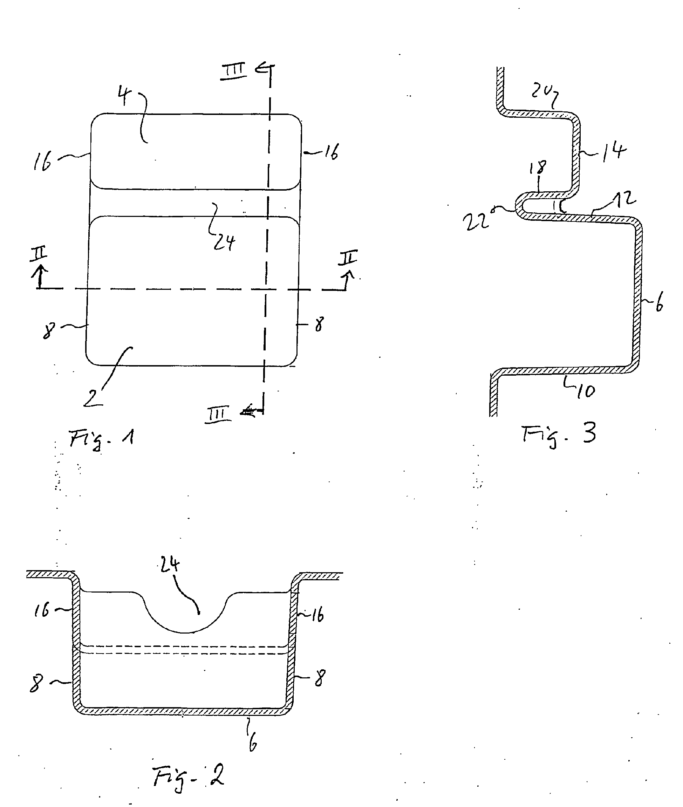

The organizer unit according to Fig. 1 comprises a large open tray (2) for receiving 2 to 9 extrusion tips and a small open tray (4) for receiving one extrusion tip. The large open tray is defined by a bottom (6), two side walls (8), a front wall (10) and a rear wall (12). The small open tray is defined by a bottom (14), two side walls (16), a front wall (18) and a rear wall (20). Both trays are formed as a unitary twin-tray structure as follows. The side walls (8) of the large tray (2) and the side walls (16) of the small tray (4) are continuous with each other.

The rear wall (12) of the large tray (2) and the front wall (18) of the small tray (4) are connected with each other at their upper end by a curved web (22). Thus the rear wall (12) of the large tray (2), the front wall of the small tray (4) and the web (22) form a separation a barrier between the large tray (2) and the small tray (4).

The small tray is large enough for housing a single extrusion tip. The removal of the extrusion tip from the small tray (4) is facilitated by a recess (24) in the barrier which may be rectangular or curved, e.g. essentially semi-circular. It is adapted (in terms of size and shape) for easy contact between a finger and the tip. The bottom (14) of the small tray (4) is situated at a higher level than the bottom (6) of the large tray (2) which facilitates the manipulation of the tip in the small tray. Thus, the large tray (2) is deep and the small tray (4) is shallow. The openings of both trays are preferably at the same level. The large tray is large enough for receiving 2 to 9 tips, or more preferred 4 to 8 tips.

The distance between the side walls (8) and the distance between the sidewalls (16) correspond to the length of a tip so as to facilitate orderly positioning and facile introduction and removal. The front wall (10) and the rear wall (12) of the large tray (2) are slightly inclined for facilitating insertion and removal of the tips. The rounded web (22) connecting the upper end of the rear wall (12) of the large tray (2) with the upper end of front wall (18) of the small tray also facilitates transfer of a solitary tip from the large tray to the small tray by the movement of a single finger. For this purpose, the level of the rounded web (22) is lower than the upper ends of the walls (8, 10, 16, 20).

Several organizer units may be integrated together with other storage trays in an organizer in the form of an insert for a drawer of a chair-side cabinet.

The containers are tips to be attached to an applicator device. It is usual that they are designed for one use only. In special cases a container may also be designed for multiple, interrupted use. In this case, a used container may be placed in the small tray (or provision) for renewed use.

## Claims

1. A kit of parts comprising
(A) a dental chair-side organizer of transparent plastic material comprising a plurality of organizer units for storing and presenting a ready to use plurality of extrusion tips with dental material, whereby each organizer unit comprises
(a) a large, deep open tray (2) with a capacity for 2 to 9 extrusion tips, which is defined by a bottom (6), two side walls (8), a front wall (10) and a rear wall (12), whereby the width of the tray (2) corresponds to the length of the extrusion tips;
(b) a small, shallow open tray (4) with a capacity for one extrusion tip, which is defined by a bottom (14), two side walls (16), a front wall (18) and a rear wall (20) and which is smaller and more shallow than the open tray (2), whereby the width of the tray corresponds to the length of the extrusion tips;
(c) whereby the bottom (14) of the small open tray (4) is located at a higher level than the bottom (6) of the large open tray (2);
(d) whereby side walls (8) of the large tray (2) and the side walls (16) of the small tray (4) are continuous with each other, whereby the rear wall (12) of the large tray (2) and the front wall (18) of the small tray (4) are connected with each other at their upper end by a curved web (22) whereby the rear wall (12) of the large tray (2), the front wall of the small tray (4) and the web (22) form a separation barrier between the large tray (2) and the small tray (4) and thereby a unitary twin tray with a rounded web (22) as a separation barrier between the large open tray (2) and the small, open tray (4);
(e) whereby the small open tray (4) is adapted for holding the extrusion tip in a specific orientation or position for discrimination from the other extrusion tips in the organizer; and
(f) whereby the large open tray (2) and the small open tray (4) are arranged for
(i) facile charging said open tray (2) with said number of extrusion tips by having an inclined front wall (10) and rear wall (12) of the large tray (2);
(ii) facile transference of said one extrusion tip from said open tray (2) to said open tray (4) by a level of the rounded web (22) which is lower than the upper ends of the walls (8,10, 16, 20), and
(iii) facile removal and reintroduction of said one extrusion tip from or into said small open tray (4); and
(B) a plurality of extrusion tips with dental material for being stored and presented in the dental chair-side organizer of transparent plastic material comprising a plurality of organizer units according to (A).

2. The kit of parts according to claim 1, whereby it is a chair-side drawer insert.

## Patentansprüche

1. Besteck, umfassend
(A) eine Organisationshilfe für einen Zahnarztstuhl, aus transparentem Plastikmaterial, umfassend eine Mehrzahl von Organisationseinheiten zur Lagerung und Darreichung einer verwendungsfertigen Mehrzahl von Extrusionskapseln mit Dentalmaterial, wobei jede Organisationseinheit umfasst
(a) ein großes, tiefes offenes Fach (2) mit einer Kapazität für 2 bis 9 Extrusionskapseln, das von einem Boden (6), zwei Seitenwänden (8), einer Vorderwand (10) und einer Hinterwand (12) definiert wird, wobei die Breite des Fachs (2) der Länge der Extrusionskapseln entspricht;
(b) ein kleines, flaches offenes Fach (4) mit einer Kapazität für eine Extrusionskapsel, das definiert wird von einem Boden (14), zwei Seitenwänden (16), einer Vorderwand (18) und einer Rückwand (20) und das kleiner und flacher ist als das offene Fach (2), wobei die Breite des Fachs der Länge der Extrusionskapsel entspricht;
(c) wobei der Boden (14) des kleinen offenen Fachs (4) sich auf einem höheren Niveau befindet als der Boden (6) des großen offenen Fachs (2);
(d) wobei Seitenwände (8) des großen Fachs (2) und die Seitenwände (16) des kleinen Fachs (4) benachbart sind, wobei die Rückwand (12) des großen Fachs (2) und die Vorderwand (18) des kleinen Fachs (4) an ihren oberen Enden miteinander verbunden sind durch eine geformten Steg (22), wobei die Rückwand (12) des großen Fachs (2), die Vorderwand des kleinen Fachs (4) und der Steg (22) eine Trennbarriere zwischen dem großen Fach (2) und dem kleinen Fach (4) bilden und **dadurch** ein einheitliches Zwillingsfach mit einem geformten Steg (22) als Trennbarriere zwischen dem großen offenen Fach (2) und dem kleinen offenen Fach (4);
(e) wobei das kleine offene Fach (4) geeignet ist Extrusionskapseln in einer bestimmten Orientierung oder Position zur Unterscheidung von anderen Organisationskapseln in der Organisationshilfe zu halten; und
(f) wobei das große offene Fach (2) und das kleine offene Fach (4) angeordnet sind zur
(i) einfachen Bestückung des offenen Fachs (2) mit der Anzahl von Extrusionskapsein durch eine geneigte Vorderwand (10) und Rückwand (12) des großen Fachs (2);
(ii) einfache Übertragung der einen Extrusionskapsel aus dem offenen Fach (2) in das offene Fach (4) durch eine Höhe der gebogenen Wand (22) die niedriger ist als das obere Ende der Wände (8, 10, 16, 20), und
(iii) einfache Entnahme und Zurücklegen der einen Extrusionskapsel aus und in das kleine offene Fach (4); und
(B) eine Mehrzahl von Extrusionskapseln mit Dentalmaterial zur Lagerung und Präsentation in der Organisationshilfe für einen Zahnarztstuhl aus transparentem Plastikmaterial, die eine Mehrzahl von Organisationseinheiten gemäß (A) umfasst.

2. Besteck nach Anspruch 1, wobei es sich um einen Einsatz für eine Schublade eines Zahnarztstuhls handelt.

## Revendications

1. Kit de pièces comportant
(A) un présentoir en une matière plastique transparente du type desserte pour fauteuil dentaire comprenant une pluralité d'unités de présentoir destinées au stockage et à la présentation d'une pluralité d'embouts d'extrusion prêts à l'emploi, contenant une matière dentaire, chaque unité de présentoir comprenant
(a) un grand plateau ouvert, profond (2) pouvant recevoir 2 à 9 embouts d'extrusion, qui est défini par un fond (6), deux parois latérales (8), une paroi avant (10) et une paroi arrière (12), de sorte que la largeur du plateau (2) correspond à la longueur des embouts d'extrusion ;
(b) un petit plateau ouvert, peu profond (4) pouvant recevoir un seul embout d'extrusion, qui est défini par un fond (14), deux parois latérales (16), une paroi avant (18) et une paroi arrière (20) et qui est plus petit et moins profond que le plateau ouvert (2), de sorte que la largeur du plateau correspond à la longueur des embouts d'extrusion ;
(c) de sorte que le fond (14) du petit plateau ouvert (4) est situé à un niveau plus élevé que le fond (6) du grand plateau ouvert (2) ;
(d) de sorte que les parois latérales (8) du grand plateau (2) et les parois latérales (16) du petit plateau (4) sont continues les unes aux autres, de sorte que la paroi arrière (12) du grand plateau (2) et la paroi avant (18) du petit plateau (4) sont reliées l'une à l'autre en leur extrémité supérieure par une cloison arrondie (22) de sorte que la paroi arrière (12) du grand plateau (2), la paroi avant du petit plateau (4) et la cloison (22) forment une barrière de séparation entre le grand plateau (2) et le petit plateau (4) et, ainsi, un plateau jumelé d'un seul tenant ayant une cloison arrondie (22) servant de barrière de séparation entre le grand plateau ouvert (2) et le petit plateau ouvert (4) ;
(e) de sorte que le petit plateau ouvert (4) est conçu pour contenir l'embout d'extrusion dans une position ou orientation spécifique pour le distinguer des autres embouts d'extrusion dans le présentoir ; et
(f) de sorte que le grand plateau ouvert (2) et le petit plateau ouvert (4) sont agencés pour
(i) un chargement facile dudit nombre d'embouts d'extrusion dans ledit plateau ouvert (2) grâce à une paroi avant inclinée (10) et une paroi arrière inclinée (12) du grand plateau (2) ;
(ii) un transfert facile dudit un embout d'extrusion dudit plateau ouvert (2) audit plateau ouvert (4) parce que la cloison arrondie (22) se trouve à un niveau plus bas que les extrémités supérieures des parois (8, 10, 16, 20), et
(iii) une extraction/une réintroduction aisées dudit un embout d'extrusion depuis/dans ledit petit plateau ouvert (4) ; et
(B) une pluralité d'embouts d'extrusion contenant une matière dentaire destinés à être stockés et présentés dans le présentoir en une matière plastique transparente du type desserte pour fauteuil dentaire comprenant une pluralité d'unités de présentoir selon (A).

2. Kit de pièces selon la revendication 1, de telle sorte à former un insert de tiroir du type desserte pour fauteuil.
